# EUROPÄISCHE PATENTSCHRIFT

(11) **EP 3 414 831 B1**
(45) Veröffentlichungstag und Bekanntmachung des Hinweises auf die Patenterteilung: **30.11.2022**
(21) Anmeldenummer: 16805051.6
(22) Anmeldetag: 28.11.2016
(51) Int. Cl.: H02P 29/02, H02P 29/024, H02H 7/08, H02P 29/032, H02P 29/60, H02P 29/40, H02P 29/028, B60L 3/00, B60L 3/04, B60L 3/12

(54) **ROBUSTE STROMBEGRENZUNG FÜR EINEN ELEKTRISCHEN ANTRIEB**
ROBUST CURRENT LIMITATION FOR AN ELECTRIC DRIVE
LIMITATION DE COURANT ROBUSTE POUR UN ENTRAÎNEMENT ÉLECTRIQUE

(30) Priorität: 09.02.2016 DE 102016201923
(43) Veröffentlichungstag der Anmeldung: 19.12.2018
(73) Patentinhaber: Valeo eAutomotive Germany GmbH, 91056 Erlangen (DE)
(72) Erfinder: BOHLLÄNDER, Marco, 96114 Hirschaid (DE); GINAL, Peter, 96178 Pommersfelden (DE); MAHISHI, Gururaj, 91054 Erlangen (DE); NJAWAH ACHIRI, Humphrey Mokom, Farmington Hills, Michigan 48335 (US); TRAUTMANN, Andreas, 91469 Hagenbüchach (DE); WALTER, Andreas, 90411 Nürnberg (DE); ZATOCIL, Heiko, 90469 Nürnberg (DE)
(74) Vertreter: Valeo Powertrain Systems
(86) Internationale Anmeldenummer: PCT/EP2016/078946
(87) Internationale Veröffentlichungsnummer: WO 2017/137107

(56) Entgegenhaltungen:
- WO-A1-2016/005074
- DE-A1- 3 731 469
- DE-A1-102004 040 315
- DE-A1-102013 201 344
- KR-A- 20140 083 686
- US-A1- 2011 015 881
- US-A1- 2011 080 124
- US-A1- 2015 295 488

## Beschreibung

Die vorliegende Erfindung geht aus von einem Betriebsverfahren für einen elektrischen Antrieb, der eine elektrische Maschine, eine die elektrische Maschine speisende Halbleiter-Schalteinrichtung und eine die Halbleiter-Schalteinrichtung steuernde Steuereinrichtung aufweist,
- wobei die Steuereinrichtung kontinuierlich einen Betriebsparameter des elektrischen Antriebs messtechnisch erfasst oder aus messtechnisch erfassten Größen ableitet,
- wobei die Steuereinrichtung kontinuierlich prüft, ob der Betriebsparameter, ausgehend von Werten unterhalb eines Auslösewertes, den Auslösewert erreicht,
- wobei die Steuereinrichtung dann, wenn der Betriebsparameter den Auslösewert erreicht, eine Maßnahme ausführt.

Die vorliegende Erfindung geht weiterhin aus von einem Steuerprogramm für eine Steuereinrichtung eines elektrischen Antriebs, der zusätzlich zur Steuereinrichtung eine von der Steuereinrichtung gesteuerte Halbleiter-Schalteinrichtung und eine von der Halbleiter-Schalteinrichtung gespeiste elektrische Maschine aufweist, wobei das Steuerprogramm Maschinencode umfasst, der von der Steuereinrichtung unmittelbar abarbeitbar ist, wobei die Abarbeitung des Maschinencodes durch die Steuereinrichtung bewirkt, dass die Steuereinrichtung den elektrischen Antrieb gemäß einem derartigen Betriebsverfahren betreibt.

Die vorliegende Erfindung geht weiterhin aus von einer Steuereinrichtung eines elektrischen Antriebs, der zusätzlich zur Steuereinrichtung eine von der Steuereinrichtung gesteuerte Halbleiter-Schalteinrichtung und eine von der Halbleiter-Schalteinrichtung gespeiste elektrische Maschine aufweist, wobei die Steuereinrichtung mit einem derartigen Steuerprogramm programmiert ist.

Die vorliegende Erfindung geht weiterhin aus von einem Umrichter, wobei der Umrichter eine die elektrische Maschine speisende Halbleiter-Schalteinrichtung und eine die Halbleiter-Schalteinrichtung steuernde Steuereinrichtung aufweist, wobei die Steuereinrichtung als derartige Steuereinrichtung ausgebildet ist.

Die vorliegende Erfindung geht weiterhin aus von einem elektrischen Antrieb, wobei der Antrieb eine elektrische Maschine, eine die elektrische Maschine speisende Halbleiter-Schalteinrichtung und eine die Halbleiter-Schalteinrichtung steuernde Steuereinrichtung aufweist, wobei die Steuereinrichtung als derartige Steuereinrichtung ausgebildet ist.

Die oben genannten Gegenstände sind beispielsweise aus der EP 2 516 198 B1 bekannt. Bei der EP 2 516 198 B1 besteht die ausgeführte Maßnahme darin, die Halbleiter-Schalteinrichtung in einen sogenannten Kurzschluss-Modus oder in einen sogenannten Freischalt-Modus zu überführen und dadurch die Halbleiter-Schalteinrichtung vor Schäden zu schützen.

Aus der US 2015/0295488 A1 ist ein Leistungswandlungssystem bekannt, das zum Versorgen eines Wechselstrommotors vorgesehen ist und das eine Leistungswandlungseinrichtung mit wenigstens einem Schaltelement und ein Steuersystem aufweist. Das Steuersystem ist elektrisch mit der Leistungswandlungseinrichtung gekoppelt und dazu eingerichtet, einen elektrischen Parameter im Zusammenhang mit dem Leistungswandlungssystem zu überwachen und einen Überstromschwellwert, der variabel bezüglich des überwachten Parameters ist, zu ermitteln. Der Parameter ist eine Zwischenkreisspannung, wobei der Überstromschwellwert derart ermittelt wird, dass er sinkt, wenn die Zwischenkreisspannung steigt.

Daneben ist aus der US 2011/0080124 A1 eine Invertereinrichtung bekannt, umfassend eine Wärmesenke, einen ersten Detektor, welcher eine Temperatur der Wärmesenke erfasst, einen an der Wärmesenke angeordneten Inverter mit einem eine Halbleitereinrichtung umfassenden Leistungsmodul, einen zweiten Detektor, welcher eine Temperatur des Leistungsmoduls erfasst, einen Schätzer, der geschätzte Werte eines thermischen Widerstands und eine thermische Kapazität der Wärmesenke auf Basis der von dem zweiten Detektor erfassten Temperatur berechnet, und einen Controller, der eine Ansteuerung des Inverters auf Basis der geschätzten Werte steuert.

Die DE 10 2004 040 315 A1 offenbart Verfahren zum Betreiben eines Hybrid-Kraftfahrzeuges, welches eine E-Maschine aufweist. Wenigstens ein Betriebsparameter von wenigstens einer elektrischen Komponente des Hybrid-Kraftfahrzeuges wird mit wenigstens einem vorbestimmten Schwellwert verglichen. Wenn der wenigstens eine vorbestimmte Betriebsparameter den wenigstens einen vorbestimmten Schwellwert erreicht, wird eine Aufteilung des Antriebsdrehmomentes auf ein Drehmoment der E-Maschine und ein Drehmoment einer Brennkraftmaschine derart geändert, dass ein Wert des wenigstens einen vorbestimmten Betriebsparameters einen kritischen Wert für diesen Betriebsparameter nicht über- oder unterschreitet.

Die DE 10 2013 201 344 A1 offenbart Managementsystem für ein elektrisches Antriebssystem mit einer Vielzahl von Komponenten des Antriebssystems, wobei das Managementsystem dazu ausgelegt ist, Betriebsparameter der Vielzahl von Komponenten des Antriebssystems zu erfassen, jeweils eine aktuelle Betriebstemperatur der Komponenten des Antriebssystems zu ermitteln, und in Abhängigkeit von einer ermittelten Betriebstemperatur einer ersten der Komponenten des Antriebssystems die Betriebsparameter einer zweiten der Komponenten des Antriebssystems einzustellen.

Weitere Betriebsverfahren sind aus der US 2011/0015881 A1, der WO 2016/005074 A1 und der DE 37 31 469 A1 bekannt.

Zum sicheren Betreiben eines elektrischen Antriebs ist es erforderlich, den Antrieb innerhalb definierter physikalischer Grenzen wie beispielsweise Temperaturen und Drehzahlen zu betreiben. Für einen optimalen Betrieb ist es weiterhin erforderlich, im Rahmen dieser physikalischen Grenzen ein maximales Moment zu bewirken. Steigende Anforderungen an die Leistungsdichte für elektrische Antriebe erfordern weiterhin eine Verkleinerung von Komponenten wie beispielsweise der Halbleiter-Schalteinrichtung und der elektrischen Maschine. Dadurch werden die physikalischen Grenzen noch weiter eingeschränkt. Die Anforderungen zu erfüllen, ohne die zulässigen physikalischen Grenzen zu überschreiten, stellt eine anspruchsvolle Aufgabe dar.

Im Stand der Technik ist es bekannt, das Drehmoment oder den Strom des elektrischen Antriebs in Abhängigkeit von physikalischen Grenzen wie beispielsweise der Temperatur oder der Drehzahl linear zu verringern, um die physikalischen Grenzen des Antriebs einzuhalten und dadurch zu gewährleisten, dass der Antrieb auf sichere Weise betrieben wird. Bei dieser Betriebsweise werden das Drehmoment bzw. der Strom immer dann reduziert, wenn die physikalischen Grenzen überschritten werden. Im Stand der Technik wird hierbei von dem maximal zulässigen Drehmoment bzw. dem maximal zulässigen Strom ausgegangen, der durch die physikalischen Möglichkeiten der jeweiligen Komponente definiert ist.

In bestimmten Betriebszuständen sind das Drehmoment bzw. der Strom, die zum Überschreiten der physikalischen Limitierungen führen, erheblich geringer als die spezifizierten Grenzen. In derartigen Situationen kann die Vorgehensweise des Standes der Technik den erforderlichen Schutz der Komponenten nicht gewährleisten.

Die Aufgabe der vorliegenden Erfindung besteht darin, Möglichkeiten zu schaffen, mittels derer auf einfache und zuverlässige Weise ein sicherer, die Komponenten des elektrischen Antriebs nicht überlastender Betrieb des elektrischen Antriebs auch unter derartigen Bedingungen gewährleistet werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 6.

Erfindungsgemäß wird ein Betriebsverfahren geschaffen, bei dem die Steuereinrichtung
- kontinuierlich einen Betriebsparameter des elektrischen Antriebs messtechnisch erfasst oder aus messtechnisch erfassten Größen ableitet,
- kontinuierlich prüft, ob der Betriebsparameter, ausgehend von Werten unterhalb eines Auslösewertes, den Auslösewert erreicht,
- dann, wenn der Betriebsparameter den Auslösewert erreicht, einen maximal zulässigen relativen Maximalstrom gleich einem zu diesem Zeitpunkt von der Halbleiter-Schalteinrichtung in die elektrische Maschine gespeisten Strom setzt,
- für Werte des Betriebsparameters zwischen dem Auslösewert und einem oberhalb des Auslösewertes liegenden Grenzwert einen Stromgrenzwertverlauf ermittelt, der vom Auslösewert zum Grenzwert des Betriebsparameters vom relativen Maximalstrom streng monoton auf einen Minimalstrom absinkt, und
- im weiteren Betrieb des elektrischen Antriebs den von der Halbleiter-Schalteinrichtung in die elektrische Maschine gespeisten Strom für Werte des Betriebsparameters zwischen dem Auslösewert und dem Grenzwert entsprechend dem ermittelten Stromgrenzwertverlauf begrenzt.

Durch diese Vorgehensweise erfolgt dann, wenn der Betriebsparameter den Auslösewert überschreitet, sofort und unmittelbar eine Reduzierung des Stromes und damit des von der elektrischen Maschine generierten Drehmoments. Dies gilt unabhängig von weiteren Betriebsparametern und vor allem unabhängig von den prinzipiellen physikalischen Grenzen des elektrischen Antriebs.

Der Minimalstrom kann prinzipiell einen beliebigen Wert aufweisen. Beispielsweise kann der Minimalstrom einen von Null verschiedenen konstanten Wert aufweisen. Vorzugsweise ist jedoch vorgesehen, dass der Minimalstrom den Wert Null aufweist oder dass die Steuereinrichtung den Minimalstrom in Abhängigkeit von dem relativen Maximalstrom und/oder einer Drehzahl der elektrischen Maschine ermittelt. Diese Vorgehensweise erleichtert zum einen die Ermittlung des Stromgrenzwertverlaufs und führt zum anderen dazu, dass unabhängig vom konkreten Wert des relativen Maximalstroms stets gewährleistet ist, dass der ermittelte Stromgrenzwertverlauf tatsächlich ein streng monoton fallender Verlauf ist.

Es ist möglich, dass die Steuereinrichtung in dem Fall, dass der Betriebsparameter den Grenzwert erreicht, sofort eine die Halbleiter-Schalteinrichtung schützende sicherheitsgerichtete Maßnahme ausführt. Vorzugsweise ist jedoch vorgesehen,
- dass die Steuereinrichtung im weiteren Betrieb des elektrischen Antriebs kontinuierlich prüft, ob der Betriebsparameter einen oberhalb des Grenzwertes liegenden Abschaltwert erreicht, und
- dass die Steuereinrichtung erst dann, wenn der Betriebsparameter den Abschaltwert erreicht, die Halbleiter-Schalteinrichtung in einen sicheren Zustand überführt.

Dadurch wird die Reaktion des elektrischen Antriebs auf das Erreichen und Überschreiten des Grenzwertes soweit wie möglich auf eine Reduzierung des von der Halbleiter-Schalteinrichtung in die elektrische Maschine gespeisten Stromes beschränkt. Nur dann, wenn es unvermeidlich ist, erfolgt das Überführen der Halbleiter-Schalteinrichtung in den sicheren Zustand. Bei dem sicheren Zustand kann es sich beispielsweise um ein Überführen des Antriebs in einen Freilauf handeln, d.h. in einen Zustand, in dem der Antrieb kein Drehmoment aufbringt. Dieser Zustand kann beispielsweise durch Überführen der Halbleiter-Schalteinrichtung in den Kurzschluss-Modus oder den Freischalt-Modus erreicht werden.

Es ist möglich, dass dann, wenn der Betriebsparameter wieder auf Werte unterhalb des Auslösewertes absinkt, die durch den Stromgrenzwertverlauf definierte Limitierung des von der Halbleiter-Schalteinrichtung in die elektrische Maschine gespeisten Stromes sofort wieder aufgehoben wird. Vorzugsweise ist jedoch vorgesehen,
- dass die Steuereinrichtung im weiteren Betrieb des elektrischen Antriebs für Werte des Betriebsparameters unterhalb des Auslösewertes den von der Halbleiter-Schalteinrichtung in die elektrische Maschine gespeisten Strom auf den relativen Maximalstrom begrenzt, bis der Betriebsparameter einen unterhalb des Auslösewertes liegenden Freigabewert unterschreitet, und
- dass die Steuereinrichtung dann, wenn der Betriebsparameter den Freigabewert unterschreitet, die Begrenzung des von der Halbleiter-Schalteinrichtung in die elektrische Maschine gespeisten Stromes auf den relativen Maximalstrom aufhebt.

Durch eine derartige Hysterese kann insbesondere ein robuster und stabiler Betrieb des Antriebs gewährleistet werden.

Vorzugsweise ist vorgesehen, dass die Steuereinrichtung für Werte des Betriebsparameters unterhalb des Auslösewertes den von der Halbleiter-Schalteinrichtung in die elektrische Maschine gespeisten Strom auf einen absoluten Maximalstrom begrenzt. Dadurch kann gewährleistet werden, dass der von der Halbleiter-Schalteinrichtung in die elektrische Maschine gespeiste Strom auch für Werte des Betriebsparameters unterhalb des Auslösewertes stets im zulässigen Bereich gehalten wird. Diese Vorgehensweise impliziert weiterhin, dass der relative Maximalstrom nie größer als der absolute Maximalstrom sein kann. Vielmehr kann der relative Maximalstrom maximal so groß wie der absolute Maximalstrom sein.

Der Betriebsparameter kann nach Bedarf bestimmt sein. Insbesondere ist es möglich, dass der Betriebsparameter eine Temperatur der Halbleiter-Schalteinrichtung, eine Temperatur der elektrischen Maschine oder eine Drehzahl der elektrischen Maschine ist.

Die Aufgabe wird weiterhin durch ein Steuerprogramm mit den Merkmalen des Anspruchs 7 gelöst. Erfindungsgemäß bewirkt die Abarbeitung des Maschinencodes durch die Steuereinrichtung, dass die Steuereinrichtung den elektrischen Antrieb gemäß einem erfindungsgemäßen Betriebsverfahren betreibt.

Die Aufgabe wird weiterhin durch eine Steuereinrichtung eines elektrischen Antriebs mit den Merkmalen des Anspruchs 8 gelöst. Erfindungsgemäß ist die Steuereinrichtung mit einem erfindungsgemäßen Steuerprogramm programmiert.

Die Aufgabe wird weiterhin durch einen Umrichter mit den Merkmalen des Anspruchs 9 gelöst. Erfindungsgemäß ist die Steuereinrichtung als erfindungsgemäße Steuereinrichtung ausgebildet.

Die Aufgabe wird weiterhin durch einen elektrischen Antrieb mit den Merkmalen des Anspruchs 10 gelöst. Erfindungsgemäß ist die Steuereinrichtung als erfindungsgemäße Steuereinrichtung ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen elektrischen Antrieb,
- FIG 2: ein Ablaufdiagramm und
- FIG 3 und 4: je ein Stromdiagramm.

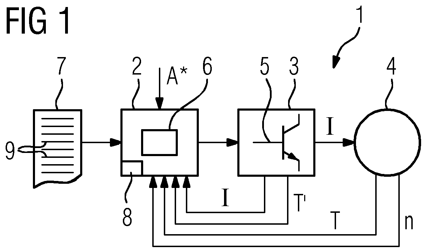

Gemäß FIG 1 besteht ein elektrischer Antrieb 1 aus einer Steuereinrichtung 2, einer Halbleiter-Schalteinrichtung 3 und einer elektrischen Maschine 4. Die Halbleiter-Schalteinrichtung 3 speist die elektrische Maschine 4. Sie wird von der Steuereinrichtung 2 gesteuert. Die Kombination von Steuereinrichtung 2 und Halbleiter-Schalteinrichtung 3 bildet einen Umrichter.

Die elektrische Maschine 4 kann nach Bedarf ausgebildet sein, beispielsweise als Asynchronmaschine, als permanenterregte Synchronmaschine, als elektrisch erregte Synchronmaschine, als Reluktanzmaschine, als bürstenlose Gleichstrommaschine usw. Der Umrichter 3 weist intern Halbleiterventile 5 auf. Die Halbleiterventile 5 können beispielsweise als MOSFETs oder als IGBTs ausgebildet sein. Auch eine Ausgestaltung als GTOs ist möglich.

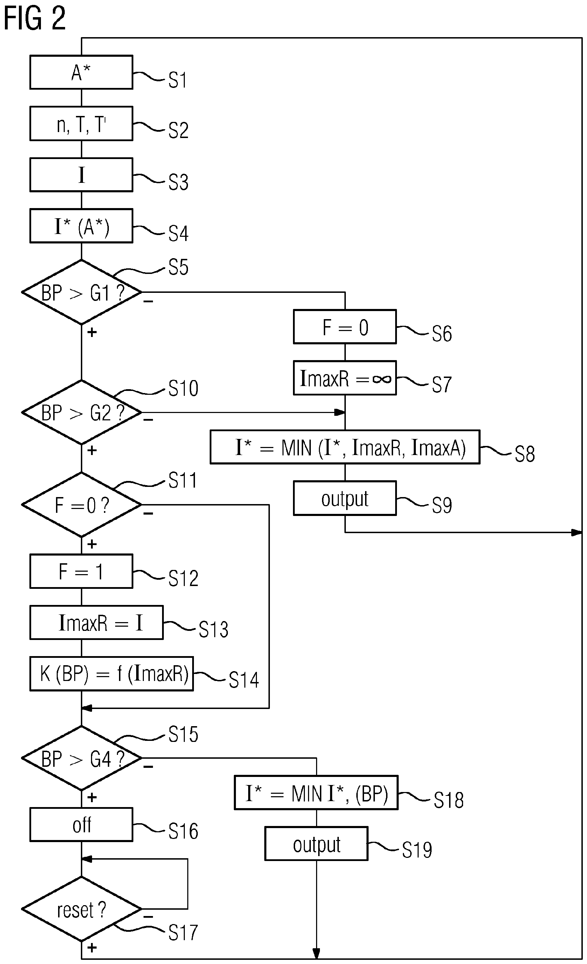

Die Steuereinrichtung 2 ist als softwareprogrammierbare Steuereinrichtung ausgebildet. Die Steuereinrichtung 2 weist daher eine Logik 6 auf, beispielsweise einen Mikroprozessor. Die Wirkungsweise der Steuereinrichtung 2 wird durch ein Steuerprogramm 7 bestimmt, mit dem die Steuereinrichtung 2 programmiert ist. Das Steuerprogramm 7 kann zu diesem Zweck beispielsweise in einem Remanentspeicher 8 der Steuereinrichtung 2 hinterlegt sein. Das Steuerprogramm 6 umfasst Maschinencode 9, der von der Steuereinrichtung 2 unmittelbar abarbeitbar ist. Die Abarbeitung des Maschinencodes 9 durch die Steuereinrichtung 2 bewirkt, dass die Steuereinrichtung 2 den elektrischen Antrieb 1 gemäß einem Betriebsverfahren betreibt, das nachstehend in Verbindung mit FIG 2 sowie den FIG 3 und 4 näher erläutert wird.

Gemäß FIG 2 nimmt die Steuereinrichtung 2 in einem Schritt S1 eine Anforderung A* entgegen. Die Anforderung A* legt fest, welcher Betriebszustand des elektrischen Antriebs 1 von außen angefordert wird. Beispielsweise kann der elektrische Antrieb 1 als Fahrantrieb oder als unterstützender Fahrantrieb für ein Elektroauto ausgebildet sein. In diesem Fall kann die Anforderung A* beispielsweise in Abhängigkeit von der Stellung eines Fahrpedals (umgangssprachlich "Gaspedal" genannt) bestimmt sein.

In einem Schritt S2 nimmt die Steuereinrichtung 2 messtechnisch erfasste Größen n, T, T' entgegen, beispielsweise eine Drehzahl n der elektrischen Maschine 4, eine Temperatur T der elektrischen Maschine 4 oder eine Temperatur T' der Halbleiter-Schalteinrichtung 3. Bei der Temperatur T der elektrischen Maschine 4 kann es sich beispielsweise um eine Temperatur eines Wicklungskopfes der elektrischen Maschine 4 handeln. Bei der Temperatur T' der Halbleiter-Schalteinrichtung 3 kann es sich beispielsweise um eine Temperatur der Halbleiterventile 5 der Halbleiter-Schalteinrichtung 3 handeln, insbesondere um deren Sperrschichttemperatur.

Es ist möglich, dass die Steuereinrichtung 2 eine der messtechnisch erfassten Größen n, T, T' (oder eine andere, hier nicht genannte messtechnisch erfasste Größe des elektrischen Antriebs 1) unmittelbar als Betriebsparameter BP im Sinne der vorliegenden Erfindung verwendet. Alternativ ist es möglich, dass die Steuereinrichtung 2 den Betriebsparameter BP aus messtechnisch erfassten Größen ableitet. Bei den messtechnisch erfassten Größen, aus denen die Steuereinrichtung 2 den Betriebsparameter BP ableitet, kann es sich um die vorstehend explizit genannten Größen n, T, T' oder andere Größen handeln. Es ist weiterhin möglich, dass die Steuereinrichtung 2 als Betriebsparameter BP die Drehzahl n der elektrischen Maschine 4, eine Temperatur T der elektrischen Maschine 4 oder eine Temperatur T' der Halbleiterventile 5 der Halbleiter-Schalteinrichtung 3 verwendet, wobei die Steuereinrichtung 2 dennoch den Betriebsparameter BP anhand von anderen, messtechnisch erfassten Größen ermittelt.

In einem Schritt S3 nimmt die Steuereinrichtung 2 einen Messwert für den Strom I entgegen, mit dem die Halbleiter-Schalteinrichtung 3 die elektrische Maschine 4 speist. Weiterhin ermittelt die Steuereinrichtung, in einem Schritt S4, ausgehend von der Anforderung A*, einen Sollwert I* für den Strom I, mit dem die Halbleiter-Schalteinrichtung 3 die elektrische Maschine 4 speist.

In einem Schritt S5 prüft die Steuereinrichtung 2, ob der Betriebsparameter BP oberhalb eines vorbestimmten Wertes G1 liegt, nachfolgend als Freigabewert bezeichnet. Wenn dies nicht der Fall ist, der Betriebsparameter BP also unterhalb des Freigabewertes G1 liegt, geht die Steuereinrichtung 2 zu Schritten S6 bis S9 über.

Im Schritt S6 setzt die Steuereinrichtung 2 ein Flag F auf den Wert 0. Im Schritt S7 setzt die Steuereinrichtung 2 einen relativen Maximalstrom ImaxR auf den Wert unendlich (bzw. einen hinreichend hohen Wert). Im Schritt S8 bestimmt die Steuereinrichtung 2 den Stromsollwert I* neu. Insbesondere bestimmt die Steuereinrichtung 2 im Schritt S8 den Stromsollwert I* als Minimum des vorherigen Stromsollwertes I*, des relativen Maximalstroms ImaxR und eines absoluten Maximalstroms ImaxA. Der Schritt S8 liefert zugleich auch die Bedingung für den Wert, auf den der relative Maximalstrom ImaxR im Schritt S7 mindestens gesetzt werden muss, nämlich auf den absoluten Maximalstrom ImaxA. Im Schritt S9 steuert die Steuereinrichtung 2 die Halbleiter-Schalteinrichtung 3 entsprechend dem im Schritt S8 ermittelten Sollstrom I* an. Beispielsweise kann die Steuereinrichtung 2 im Rahmen des Schrittes S9 ein pulsweitenmoduliertes Ansteuerungsmuster oder ein pulsfrequenzmoduliertes Ansteuerungsmuster bestimmen und die Halbleiter-Schalteinrichtung 3 mit diesem Ansteuerungsmuster ansteuern. Der Schritt S9 als solcher ist Fachleuten allgemein bekannt.

Wenn der Betriebsparameter BP oberhalb des Freigabewertes G1 liegt, geht die Steuereinrichtung 2 zu einem Schritt S10 über. Im Schritt S10 prüft die Steuereinrichtung 2, ob der Betriebsparameter BP oberhalb eines weiteren vorbestimmten Wertes G2 liegt, nachfolgend als Auslösewert bezeichnet. Wenn dies nicht der Fall ist, der Betriebsparameter BP also unterhalb des Auslösewertes G2 liegt, geht die Steuereinrichtung 2 zum Schritt S8 über.

Wenn der Betriebsparameter BP oberhalb des Auslösewertes G2 liegt, geht die Steuereinrichtung 2 zu einem Schritt S11 über. Im Schritt S11 prüft die Steuereinrichtung 2, ob das Flag F den Wert Null aufweist, also nicht gesetzt ist. Wenn dies der Fall ist, das Flag F also nicht gesetzt ist, führt die Steuereinrichtung 2 Schritte S12 bis S14 aus.

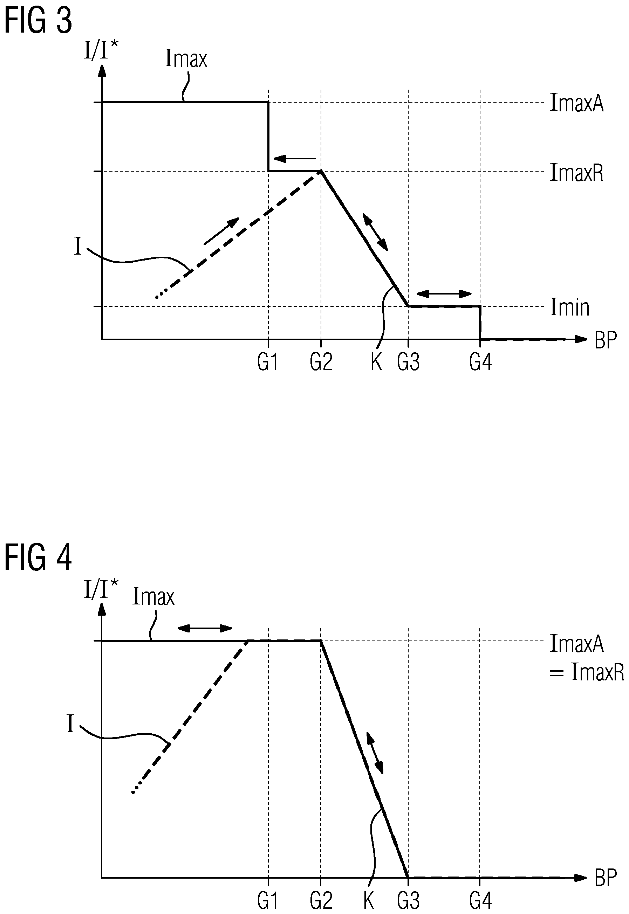

Im Schritt S12 setzt die Steuereinrichtung 2 das Flag F auf den Wert 1. Im Schritt S13 setzt die Steuereinrichtung 2 den relativen Maximalstrom ImaxR auf den Wert des momentanen Stromes I, also auf den im Schritt S3 erfassten Wert des Stromes I. Im Schritt S14 ermittelt die Steuereinrichtung 2 einen Stromgrenzwertverlauf K. Der Stromgrenzwertverlauf K ist zumindest für Werte des Betriebsparameters BP zwischen dem Auslösewert G2 und Grenzwert G3 definiert. Der Grenzwert G3 liegt oberhalb des Auslösewertes G2. Innerhalb dieses Bereichs, also zwischen dem Auslösewert G2 und dem Grenzwert G3 ist der Stromgrenzwertverlauf K streng monoton fallend. Der - je nach konkretem Wert des Betriebsparameters BP - maximal zulässige Strom Imax sinkt also entsprechend der Darstellung in FIG 3, ausgehend vom relativen Maximalstrom ImaxR für den Auslösewert G2, auf einen Minimalstrom Imin für den Grenzwert G3 ab.

Sodann geht die Steuereinrichtung 2 zu einem Schritt S15 über. Im Schritt S15 prüft die Steuereinrichtung 2, ob der Betriebsparameter BP oberhalb eines weiteren vorbestimmten Wertes G4 liegt, nachfolgend als Abschaltwert bezeichnet. Wenn dies der Fall ist, der Betriebsparameter BP also oberhalb des Abschaltwertes G4 liegt, geht die Steuereinrichtung 2 zum Schritt S16 über. Im Schritt S16 überführt die Steuereinrichtung 2 die Halbleiter-Schalteinrichtung 3 in einen sicheren Zustand. Beispielsweise kann die Steuereinrichtung 2 im Schritt S16 die Halbleiter-Schalteinrichtung 3 in einen Kurzschluss-Modus oder in einen Freischalt-Modus überführen. Im Kurzschluss-Modus werden die mit einem niedrigen Potenzial verbundenen Halbleiterventile 5 der Halbleiter-Schalteinrichtung 3 geschlossen und werden weiterhin die mit einem hohen Potenzial verbundenen Halbleiterventile 5 der Halbleiter-Schalteinrichtung 3 geöffnet. Im Freischalt-Modus werden sämtliche Halbleiterventile 5 der Halbleiter-Schalteinrichtung 3 geöffnet. Die entsprechenden Modi sind Fachleuten allgemein bekannt. Sodann geht die Steuereinrichtung 2 zu einem Schritt S17 über. Im Schritt S17 wartet die Steuereinrichtung 2 einen Reset ab.

Wenn die Steuereinrichtung 2 nicht zum Schritt S16 übergeht, geht sie zu einem Schritt S18 über. Im Schritt S18 bestimmt die Steuereinrichtung 2 den Stromsollwert I* neu. Insbesondere bestimmt die Steuereinrichtung 2 im Schritt S18 den Stromsollwert I* als Minimum des vorherigen Stromsollwertes I* und des jeweiligen Wertes, der sich durch Einsetzen des momentanen Betriebsparameters BP in den Stromgrenzwertverlauf K ergibt. Sodann steuert die Steuereinrichtung 2 in einem Schritt S19 die Halbleiter-Schalteinrichtung 3 entsprechend dem im Schritt S18 ermittelten Sollstrom I* an. Der Schritt S19 korrespondiert inhaltlich mit dem Schritt S9.

Ausgehend vom Schritt S9 bzw. vom Schritt S17 (dort im Falle der Ausführung des JA-Zweiges) bzw. vom Schritt S19 geht die Steuereinrichtung 2 wieder zum Schritt S1 über. Im Ergebnis wird die Vorgehensweise von FIG 2 somit iterativ und damit immer wieder ausgeführt. Dadurch erfolgt insbesondere eine kontinuierliche Prüfung, ob der Freigabewert G1, der Auslösewert G2 und der Abschaltwert G4 erreicht bzw. überschritten werden. Auch werden die verschiedenen Istgrößen n, T, T' und der Strom I von der Steuereinrichtung 2 kontinuierlich entgegengenommen.

Obenstehend wurde jeweils geprüft, ob der Betriebsparameter BP größer als der Freigabewert G1, der Auslösewert G2 und der Abschaltwert G4 sind. Der Fall, in dem der jeweilige Wert G1, G2, G4 exakt erreicht wird, wurde also bereits dem NEIN-Zweig der jeweiligen Prüfung zugeordnet. Dieser singuläre Fall könnte jedoch ebenso dem JA-Zweig der jeweiligen Prüfung zugeordnet sein.

Die FIG 3 und 4 zeigen rein beispielhaft zwei mögliche Verläufe des Stromes I als Funktion des Betriebsparameters BP.

Gemäß FIG 3 steigt der Strom I an, bis der Auslösewert G2 erreicht wird. Der zu diesem Zeitpunkt gegebene Strom I definiert den relativen Maximalstrom ImaxR. Oberhalb des Auslösewertes G2 wird der Strom I durch den Stromgrenzwertverlauf K beschränkt bzw. begrenzt, wobei der Stromgrenzwertverlauf K, ausgehend vom Auslösewert G2, bis zum Grenzwert G3 auf den Minimalstrom Imin absinkt. Der Minimalstrom Imin weist in der Darstellung von FIG 3 einen von 0 verschiedenen Wert auf. Der Minimalstrom Imin kann in diesem Fall insbesondere von der Steuereinrichtung 2 in Abhängigkeit von dem relativen Maximalstrom ImaxR ermittelt werden, beispielsweise zu einem vorbestimmten, geringen Prozentsatz (maximal 5-10 %) des relativen Maximalstromes ImaxR. Alternativ ist eine Begrenzung beispielsweise durch die Drehzahl n des Antriebs 1 möglich.

Oberhalb des Grenzwertes G3 wird der Strom I durch den Minimalstrom Imin begrenzt, bis der Betriebsparameter BP den Abschaltwert G4 erreicht. Dann erfolgt ein Abschalten der Halbleiter-Schalteinrichtung 3. Wenn hingegen der Betriebsparameter BP nach dem Erreichen und Überschreiten des Auslösewertes G2 wieder auf kleinere Werte absinkt, wird der Strom I weiterhin auf den relativen Maximalstrom ImaxR begrenzt, bis der Betriebsparameter BP unter den Freigabewert G1 sinkt. Dann wird die Beschränkung auf den relativen Maximalstrom ImaxR aufgehoben. Der Strom I ist danach nur noch durch den absoluten Maximalstrom ImaxA begrenzt, bis erneut der Auslösewert G2 erreicht wird.

FIG 4 zeigt einen anderen möglichen Verlauf des Stromes I. Bei der Ausgestaltung gemäß FIG 4 wird der absolute Maximalstrom ImaxA bereits erreicht, bevor der Betriebsparameter BP den Auslösewert G2 erreicht. In diesem Fall wirkt also bereits der absolute Maximalstrom ImaxA begrenzend. Mit Erreichen und Überschreiten des Auslösewertes G2 wird jedoch oberhalb des Auslösegrenzwertes G2 erneut der Strom I durch den Stromgrenzwertverlauf K beschränkt bzw. begrenzt. Der Stromgrenzwertverlauf K ist zwar quantitativ anders als bei FIG 3, sinkt jedoch ebenfalls bis zum Grenzwert G3 auf den Minimalstrom Imin ab und wird danach bis zum Erreichen des Abschaltwertes G4 beibehalten. FIG 4 zeigt weiterhin, dass der Minimalstrom Imin nicht notwendigerweise von Null verschieden sein muss. Denn bei der Ausgestaltung gemäß FIG 4 weist der Minimalstrom Imin den Wert Null auf.

Der Freigabewert G1, der Auslösewert G2, der Grenzwert G3 und der Abschaltwert G4 können je nach Lage des Einzelfalls bestimmt werden. Wenn der Betriebsparameter BP die Sperrschichttemperatur der Halbleiterventile 5 der Halbleiter-Schalteinrichtung 3 ist, können die Werte beispielsweise bei ca. 130°C, ca. 135°C, ca. 145°C und ca. 150°C liegen. Der absolute Maximalstrom ImaxA kann - je nach Ausgestaltung der Halbleiter-Schalteinrichtung 3 - beispielsweise bei 500 bis 1000 A liegen.

Obenstehend wurde in Verbindung mit den FIG 2 bis 4 ein Ausführungsbeispiel der vorliegenden Erfindung erläutert, bei der zugleich auch mehrere vorteilhafte Ausgestaltungen realisiert sind. Diese Ausgestaltungen sind jedoch nicht zwingend erforderlich. So könnte beispielsweise im Schritt S5 direkt geprüft werden, ob der Betriebsparameter BP größer als der Auslösewert G2 ist. In diesem Fall würde der Schritt S10 entfallen. Auch könnten beispielsweise die Schritte S15, S16 und S17 entfallen. In diesem Fall würden die Schritte S18 und S19 unbedingt (also ohne die vorherige Prüfung des Schrittes S15) ausgeführt werden. Diese Ausgestaltung wäre insbesondere dann sinnvoll, wenn der Abschaltwert G4 mit dem Grenzwert G3 identisch ist. Sie ist jedoch auch realisierbar, wenn der Abschaltwert G4 größer als der Grenzwert G3 ist. Weiterhin könnte unter Umständen die Begrenzung auf den absoluten Maximalstrom ImaxA entfallen.

Zusammengefasst betrifft die vorliegende Erfindung somit folgenden Sachverhalt:
Eine Steuereinrichtung 2 eines elektrischen Antriebs 1 erfasst kontinuierlich einen Betriebsparameter BP des elektrischen Antriebs 1 messtechnisch oder leitet den Betriebsparameter BP aus messtechnisch erfassten Größen n, T, T' ab. Sie prüft kontinuierlich, ob der Betriebsparameter BP, ausgehend von Werten unterhalb eines Auslösewertes G2, den Auslösewert G2 erreicht. Wenn der Betriebsparameter BP den Auslösewert G2 erreicht, setzt die Steuereinrichtung 2 einen maximal zulässigen relativen Maximalstrom ImaxR gleich einem zu diesem Zeitpunkt von der Halbleiter-Schalteinrichtung 3 in die elektrische Maschine 4 gespeisten Strom I. Für Werte des Betriebsparameters BP zwischen dem Auslösewert G2 und einem oberhalb des Auslösewertes G2 liegenden Grenzwert G3 ermittelt die Steuereinrichtung 2 einen Stromgrenzwertverlauf K, der vom Auslösewert G2 zum Grenzwert G3 des Betriebsparameters BP vom relativen Maximalstrom ImaxR streng monoton auf einen Minimalstrom Imin absinkt. Im weiteren Betrieb des elektrischen Antriebs 1 begrenzt die Steuereinrichtung 2 den von der Halbleiter-Schalteinrichtung 3 in die elektrische Maschine 4 gespeisten Strom I für Werte des Betriebsparameters BP zwischen dem Auslösewert G2 und dem Grenzwert G3 entsprechend dem ermittelten Stromgrenzwertverlauf K.

Die vorliegende Erfindung weist viele Vorteile auf. Insbesondere erfolgt unter nahezu allen äußeren Umständen ein sicherer Betrieb des elektrischen Antriebs 1. Dies gilt - zwar nicht ausschließlich, wohl aber unter anderem - in dem Fall, dass eine eigentlich gewünschte und vorausgesetzte Kühlung der Halbleiter-Schalteinrichtung 3 oder der elektrischen Maschine 4 ausfällt oder nur mit reduzierter Leistung arbeitet. Weiterhin kann ein abruptes Abschalten des Antriebs 1 vermieden werden. Es erfolgt vielmehr ein graduelles Zurückfahren, das vom Nutzer beispielsweise eines Elektroautos als erheblich weniger störend empfunden wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung wie in den Ansprüchen definiert zu verlassen.

## Patentansprüche

1. Betriebsverfahren für einen elektrischen Antrieb (1), der eine elektrische Maschine (4), eine die elektrische Maschine (4) speisende Halbleiter-Schalteinrichtung (3) und eine die Halbleiter-Schalteinrichtung (3) steuernde Steuereinrichtung (2) aufweist, wobei die Steuereinrichtung (2)
- kontinuierlich einen Betriebsparameter (BP) des elektrischen Antriebs (1) messtechnisch erfasst oder aus messtechnisch erfassten Größen (n, T, T') ableitet,
- kontinuierlich prüft, ob der Betriebsparameter (BP), ausgehend von Werten unterhalb eines Auslösewertes (G2), den Auslösewert (G2) erreicht,
- dann, wenn der Betriebsparameter (BP) den Auslösewert (G2) erreicht, einen maximal zulässigen relativen Maximalstrom (ImaxR) gleich einem zu diesem Zeitpunkt von der Halbleiter-Schalteinrichtung (3) in die elektrische Maschine (4) gespeisten Strom (I) setzt,
- für Werte des Betriebsparameters (BP) zwischen dem Auslösewert (G2) und einem oberhalb des Auslösewertes (G2) liegenden Grenzwert (G3) einen Stromgrenzwertverlauf (K) ermittelt, der vom Auslösewert (G2) zum Grenzwert (G3) des Betriebsparameters (BP) vom relativen Maximalstrom (ImaxR) streng monoton auf einen Minimalstrom (Imin) absinkt, und
- im weiteren Betrieb des elektrischen Antriebs (1) den von der Halbleiter-Schalteinrichtung (3) in die elektrische Maschine (4) gespeisten Strom (I) für Werte des Betriebsparameters (BP) zwischen dem Auslösewert (G2) und dem Grenzwert (G3) entsprechend dem ermittelten Stromgrenzwertverlauf (K) begrenzt.

2. Betriebsverfahren nach Anspruch 1,
**dadurch gekennzeichnet, dass** der Minimalstrom (Imin) den Wert Null aufweist oder dass die Steuereinrichtung (2) den Minimalstrom (Imin) in Abhängigkeit von dem relativen Maximalstrom (ImaxR) und/oder einer Drehzahl (n) der elektrischen Maschine (4) ermittelt.

3. Betriebsverfahren nach Anspruch 1 oder 2,
**dadurch gekennzeichnet,**
- **dass** die Steuereinrichtung (2) im weiteren Betrieb des elektrischen Antriebs (1) kontinuierlich prüft, ob der Betriebsparameter (BP) einen oberhalb des Grenzwertes (G3) liegenden Abschaltwert (G4) erreicht, und
- **dass** die Steuereinrichtung (2) erst dann, wenn der Betriebsparameter (BP) den Abschaltwert (G4) erreicht, die Halbleiter-Schalteinrichtung (3) in einen sicheren Zustand überführt.

4. Betriebsverfahren nach Anspruch 1, 2 oder 3,
**dadurch gekennzeichnet,**
- **dass** die Steuereinrichtung (2) im weiteren Betrieb des elektrischen Antriebs (1) für Werte des Betriebsparameters (BP) unterhalb des Auslösewertes (G2) den von der Halbleiter-Schalteinrichtung (3) in die elektrische Maschine (4) gespeisten Strom (I) auf den relativen Maximalstrom (ImaxR) begrenzt, bis der Betriebsparameter (BP) einen unterhalb des Auslösewertes (G2) liegenden Freigabewert (G1) unterschreitet, und
- **dass** die Steuereinrichtung (2) dann, wenn der Betriebsparameter (BP) den Freigabewert (G1) unterschreitet, die Begrenzung des von der Halbleiter-Schalteinrichtung (3) in die elektrische Maschine (4) gespeisten Stromes (I) auf den relativen Maximalstrom (ImaxR) aufhebt.

5. Betriebsverfahren nach einem der obigen Ansprüche, **dadurch gekennzeichnet, dass** die Steuereinrichtung (2) für Werte des Betriebsparameters (BP) unterhalb des Auslösewertes (G2) den von der Halbleiter-Schalteinrichtung (3) in die elektrische Maschine (4) gespeisten Strom (I) auf einen absoluten Maximalstrom (ImaxA) begrenzt.

6. Betriebsverfahren nach einem der obigen Ansprüche, **dadurch gekennzeichnet, dass** der Betriebsparameter (BP) eine Temperatur (T') der Halbleiter-Schalteinrichtung (3), eine Temperatur (T) der elektrischen Maschine (4) oder eine Drehzahl (n) der elektrischen Maschine (4) ist.

7. Steuerprogramm für eine Steuereinrichtung (2) eines elektrischen Antriebs (1), der zusätzlich zur Steuereinrichtung (2) eine von der Steuereinrichtung (2) gesteuerte Halbleiter-Schalteinrichtung (3) und eine von der Halbleiter-Schalteinrichtung (3) gespeiste elektrische Maschine (4) aufweist, wobei das Steuerprogramm Maschinencode (9) umfasst, der von der Steuereinrichtung (2) unmittelbar abarbeitbar ist, wobei die Abarbeitung des Maschinencodes (9) durch die Steuereinrichtung (2) bewirkt, dass die Steuereinrichtung (2) den elektrischen Antrieb (1) gemäß einem Betriebsverfahren nach einem der obigen Ansprüche betreibt, wobei die Steuereinrichtung (2) eingerichtet ist kontinuierlich einen Betriebsparameter (BP) des elektrischen Antriebs (1) messtechnisch zu erfassen oder aus messtechnisch erfassten Größen (n, T, T') abzuleiten.

8. Steuereinrichtung eines elektrischen Antriebs (1), der zusätzlich zur Steuereinrichtung eine von der Steuereinrichtung gesteuerte Halbleiter-Schalteinrichtung (3) und eine von der Halbleiter-Schalteinrichtung (3) gespeiste elektrische Maschine (4) aufweist, wobei die Steuereinrichtung mit einem Steuerprogramm (7) nach Anspruch 7 programmiert ist.

9. Umrichter, wobei der Umrichter eine die elektrische Maschine (4) speisende Halbleiter-Schalteinrichtung (3) und eine die Halbleiter-Schalteinrichtung (3) steuernde Steuereinrichtung (2) aufweist, wobei die Steuereinrichtung (2) als Steuereinrichtung nach Anspruch 8 ausgebildet ist.

10. Elektrischer Antrieb, wobei der Antrieb eine elektrische Maschine (4), eine die elektrische Maschine (4) speisende Halbleiter-Schalteinrichtung (3) und eine die Halbleiter-Schalteinrichtung (3) steuernde Steuereinrichtung (2) aufweist, wobei die Steuereinrichtung (2) als Steuereinrichtung nach Anspruch 8 ausgebildet ist.

## Claims

1. Operating method for an electric drive (1) that has an electric machine (4), a semiconductor switching device (3) feeding the electric machine (4), and a control device (2) controlling the semiconductor switching device (3), wherein the control device (2)
- continuously acquires an operating parameter (BP) of the electric drive (1) through measurement or derives said operating parameter from variables (n, T, T') acquired through measurement,
- continuously checks whether the operating parameter (BP), starting from values below a trigger value (G2), reaches the trigger value (G2),
- then, if the operating parameter (BP) reaches the trigger value (G2), sets a maximum permissible relative maximum current (ImaxR) equal to a current (I) being fed by the semiconductor switching device (3) into the electric machine (4) at this time,
- ascertains, for values of the operating parameter (BP) between the trigger value (G2) and a limit value (G3) that is above the trigger value (G2), a current limit value profile (K) that, from the trigger value (G2) to the limit value (G3) of the operating parameter (BP), falls from the relative maximum current (ImaxR) strictly monotonously to a minimum current (Imin), and
- during further operation of the electric drive (1), limits the current (I) fed by the semiconductor switching device (3) into the electric machine (4) in accordance with the ascertained current limit value profile (K) for values of the operating parameter (BP) between the trigger value (G2) and the limit value (G3).

2. Operating method according to Claim 1,
**characterized in that** the minimum current (Imin) has the value zero or **in that** the control device (2) ascertains the minimum current (Imin) depending on the relative maximum current (ImaxR) and/or a speed (n) of the electric machine (4).

3. Operating method according to Claim 1 or 2,
**characterized**
- **in that**, during further operation of the electric drive (1), the control device (2) continuously checks whether the operating parameter (BP) reaches a switch-off value (G4) that is above the limit value (G3), and
- **in that** the control device (2) transfers the semiconductor switching device (3) into a safe state only if the operating parameter (BP) reaches the switch-off value (G4).

4. Operating method according to Claim 1, 2 or 3, **characterized**
- **in that**, during further operation of the electric drive (1), for values of the operating parameter (BP) below the trigger value (G2), the control device (2) limits the current (I) fed by the semiconductor switching device (3) into the electric machine (4) to the relative maximum current (ImaxR) until the operating parameter (BP) falls below a release value (G1) that is below the trigger value (G2), and
- **in that**, if the operating parameter (BP) falls below the release value (G1), the control device (2) lifts the limitation of the current (I) fed by the semiconductor switching device (3) into the electric machine (4) to the relative maximum current (ImaxR).

5. Operating method according to one of the preceding claims, **characterized in that**, for values of the operating parameter (BP) below the trigger value (G2), the control device (2) limits the current (I) fed by the semiconductor switching device (3) into the electric machine (4) to an absolute maximum current (ImaxA).

6. Operating method according to one of the preceding claims,
**characterized in that** the operating parameter (BP) is a temperature (T') of the semiconductor switching device (3), a temperature (T) of the electric machine (4) or a speed (n) of the electric machine (4).

7. Control program for a control device (2) of an electric drive (1) that, in addition to the control device (2), has a semiconductor switching device (3) controlled by the control device (2), and an electric machine (4) fed by the semiconductor switching device (3), wherein the control program comprises machine code (9) that can be executed directly by the control device (2), wherein the execution of the machine code (9) by the control device (2) causes the control device (2) to operate the electric drive (1) according to an operating method according to one of the preceding claims, wherein the control device (2) is configured to continuously acquire an operating parameter (BP) of the electric drive (1) through measurement or derive said operating parameter from variables (n, T, T') acquired through measurement.

8. Control device of an electric drive (1) that, in addition to the control device, has a semiconductor switching device (3) controlled by the control device, and an electric machine (4) fed by the semiconductor switching device (3), wherein the control device is programmed with a control program (7) according to Claim 7.

9. Converter, wherein the converter has a semiconductor switching device (3) feeding the electric machine (4), and a control device (2) controlling the semiconductor switching device (3), wherein the control device (2) is in the form of a control device according to Claim 8.

10. Electric drive, wherein the drive has an electric machine (4), a semiconductor switching device (3) feeding the electric machine (4), and a control device (2) controlling the semiconductor switching device (3), wherein the control device (2) is in the form of a control device according to Claim 8.

## Revendications

1. Procédé d'exploitation pour un entraînement électrique (1) qui présente une machine électrique (4), un dispositif de commutation à semi-conducteur (3) alimentant la machine électrique (4) et un dispositif de commande (2) commandant le dispositif de commutation à semi-conducteur (3), dans lequel le dispositif de commande (2)
- détecte en continu par une technique de mesure un paramètre de fonctionnement (BP) de l'entraînement électrique (1) ou le déduit à partir de grandeurs (n, T, T') détectées par une technique de mesure,
- vérifie en continu si le paramètre de fonctionnement (BP), en partant de valeurs au-dessous d'une valeur de déclenchement (G2), atteint la valeur de déclenchement (G2),
- lorsque le paramètre de fonctionnement (BP) atteint la valeur de déclenchement (G2), règle un courant maximal relatif (ImaxR) admissible au maximum au même niveau qu'un courant (I) injecté à cet instant dans la machine électrique (4) par le dispositif de commutation à semi-conducteur (3),
- établit pour des valeurs du paramètre de fonctionnement (BP) entre la valeur de déclenchement (G2) et une valeur limite (G3) située au-dessus de la valeur de déclenchement (G2) une courbe de valeurs limites de courant (K) qui, de la valeur de déclenchement (G2) à la valeur limite (G3) du paramètre de fonctionnement (BP), descend de manière strictement monotone du courant maximal relatif (ImaxR) à un courant minimal (Imin), et
- au cours du fonctionnement ultérieur de l'entraînement électrique (1), limite le courant (I) injecté dans la machine électrique (4) par le dispositif de commutation à semi-conducteur (3) pour des valeurs du paramètre de fonctionnement (BP) entre la valeur de déclenchement (G2) et la valeur limite (G3) selon la courbe de valeurs limites de courant (K) établie.

2. Procédé d'exploitation selon la revendication 1, **caractérisé en ce que** le courant minimal (Imin) présente la valeur zéro, ou **en ce que** le dispositif de commande (2) établit le courant minimal (Imin) en fonction du courant maximal relatif (ImaxR) et/ou d'une vitesse de rotation (n) de la machine électrique (4).

3. Procédé d'exploitation selon la revendication 1 ou 2, **caractérisé en ce que**
- au cours du fonctionnement ultérieur de l'entraînement électrique (1), le dispositif de commande (2) vérifie en continu si le paramètre de fonctionnement (BP) atteint une valeur de coupure (G4) située au-dessus de la valeur limite (G3), et
- le dispositif de commande (2) met le dispositif de commutation à semi-conducteur (3) dans un état sûr seulement lorsque le paramètre de fonctionnement (BP) atteint la valeur de coupure (G4).

4. Procédé d'exploitation selon la revendication 1, 2 ou 3, **caractérisé en ce que**
- au cours du fonctionnement ultérieur de l'entraînement électrique (1), le dispositif de commande (2) limite pour des valeurs du paramètre de fonctionnement (BP) au-dessous de la valeur de déclenchement (G2) le courant (I) injecté dans la machine électrique (4) par le dispositif de commutation à semi-conducteur (3) au courant maximal relatif (ImaxR) jusqu'à ce que le paramètre de fonctionnement (BP) soit inférieur à une valeur de validation (G1) située au-dessous de la valeur de déclenchement (G2), et
- lorsque le paramètre de fonctionnement (BP) devient inférieur à la valeur de validation (G1), le dispositif de commande (2) annule la limitation du courant (I) injecté dans la machine électrique (4) par le dispositif de commutation à semi-conducteur (3) au courant maximal relatif (ImaxR).

5. Procédé d'exploitation selon l'une quelconque des revendications précédentes, **caractérisé en ce que** le dispositif de commande (2) limite pour des valeurs du paramètre de fonctionnement (BP) au-dessous de la valeur de déclenchement (G2) le courant (I) injecté dans la machine électrique (4) par le dispositif de commutation à semi-conducteur (3) à un courant maximal absolu (ImaxA).

6. Procédé d'exploitation selon l'une quelconque des revendications précédentes, **caractérisé en ce que** le paramètre de fonctionnement (BP) est une température (T') du dispositif de commutation à semi-conducteur (3), une température (T) de la machine électrique (4) ou une vitesse de rotation (n) de la machine électrique (4).

7. Programme de commande pour un dispositif de commande (2) d'un entraînement électrique (1) qui présente en plus du dispositif de commande (2) un dispositif de commutation à semi-conducteur (3) commandé par le dispositif de commande (2) et une machine électrique (4) alimentée par le dispositif de commutation à semi-conducteur (3), le programme de commande comprenant du code machine (9) qui peut être exécuté directement par le dispositif de commande (2), l'exécution du code machine (9) par le dispositif de commande (2) amenant le dispositif de commande (2) à faire fonctionner l'entraînement électrique (1) selon un procédé d'exploitation selon l'une quelconque des revendications précédentes, le dispositif de commande (2) étant conçu pour détecter en continu par une technique de mesure un paramètre de fonctionnement (BP) de l'entraînement électrique (1) ou pour le déduire à partir de grandeurs (n, T, T') détectées par une technique de mesure.

8. Dispositif de commande d'un entraînement électrique (1) qui présente en plus du dispositif de commande un dispositif de commutation à semi-conducteur (3) commandé par le dispositif de commande et une machine électrique (4) alimentée par le dispositif de commutation à semi-conducteur (3), le dispositif de commande étant programmé à l'aide d'un programme de commande (7) selon la revendication 7.

9. Convertisseur, le convertisseur présentant un dispositif de commutation à semi-conducteur (3) alimentant la machine électrique (4) et un dispositif de commande (2) commandant le dispositif de commutation à semi-conducteur (3), le dispositif de commande (2) étant réalisé sous la forme d'un dispositif de commande selon la revendication 8.

10. Entraînement électrique, l'entraînement présentant une machine électrique (4), un dispositif de commutation à semi-conducteur (3) alimentant la machine électrique (4) et un dispositif de commande (2) commandant le dispositif de commutation à semi-conducteur (3), le dispositif de commande (2) étant réalisé comme un dispositif de commande selon la revendication 8.
